(19) Europäisches Patentamt
European Patent Office
Office européen des brevets

(11) **EP 0 576 335 B1**

(12) **FASCICULE DE BREVET EUROPEEN**

(45) Date de publication et mention
de la délivrance du brevet:
**13.03.1996 Bulletin 1996/11**

(51) Int. Cl.⁶: **C01D 3/16**, C01B 7/14

(21) Numéro de dépôt: **93401568.6**

(22) Date de dépôt: **18.06.1993**

(54) **Procédé de purification d'une solution aqueuse de chlorure de métal alcalin pour enlever l'iode**

Verfahren zur Reinigung wässriger Alkalimetallchloridlösung zur Entfernung von Iod

Process for purification of aqueous alkali metal chloride solution for removal of iodine

(84) Etats contractants désignés:
**AT BE CH DE DK ES FR GB GR IE IT LI LU NL PT SE**

(30) Priorité: **26.06.1992 FR 9207914**

(43) Date de publication de la demande:
**29.12.1993 Bulletin 1993/52**

(73) Titulaire: **ELF ATOCHEM S.A.**
**F-92800 Puteaux (FR)**

(72) Inventeur: **Delmas, Francois**
**F-69110 Sainte Foy Les Lyon (FR)**

(56) Documents cités:
**EP-A- 0 399 588**      **FR-A- 2 501 522**
**US-A- 1 944 423**      **US-A- 4 483 754**

• **Z. Physique Chemie 265 (1984) 5, pages 1026-1033**

## Description

La présente invention concerne un procédé de purification d'une solution aqueuse de chlorure de métal alcalin pour enlever l'iode.

Les solutions aqueuses de chlorure de sodium sont électrolysées pour fabriquer le chlore et la soude.

Quand on effectue l'électrolyse selon le procédé dit "à membranes" il est nécessaire de purifier soigneusement la solution aqueuse pour enlever les impuretés habituelles dans le chlorure de sodium telles que le calcium, le magnésium et les sulfates. On utilise par exemple des précipitations par le carbonate de sodium puis des absorptions sur résines, de tels procédés sont décrits dans ULLMANN'S ENCYCLOPEDIA OF INDUSTRIAL CHEMISTRY Vol A6-1986-page 448. Selon ses origines la solution de chlorure de sodium peut aussi contenir de l'iode sous forme iodure I⁻.

La publication RESEARCH DISCLOSURE N° 30732 de novembre 1989 explique que l'iode contenu dans les solutions aqueuses de chlorure de sodium, sous forme iodure, s'oxyde en periodate dans la cellule au cours de l'électrolyse, ce periodate précipite dans la membrane et l'endommage. Selon cette publication on ajoute du baryum dans la solution avant l'électrolyse; il se forme ainsi un précipité très fin fortement insoluble de periodate de baryum.

Le brevet US-4 483 754 explique aussi que la présence d'iode dans une solution aqueuse de chlorure de sodium dans un procédé à membranes conduit à une dégradation rapide des membranes. Selon cet art antérieur l'iode présent dans la solution aqueuse sous forme iodure (degré d'oxydation -1) est oxydée sous forme d'iode moléculaire (degré d'oxydation 0) puis cet iode moléculaire est enlevé de la solution aqueuse de chlorure soit par absorption sur résine anionique soit par stripping à l'air dans une colonne.

L'Exemple 1 montre qu'une saumure contenant 80 ppm d'iode sous forme NaI (95 ppm NaI) est oxydée puis passe sur une résine anionique avec une vitesse volumique (space velocity) de 2 h⁻¹, c'est-à-dire un débit horaire de saumure de 2 fois le volume du lit de résine. La teneur en iode de la saumure est abaissée à 0,8 ppm.

L'Exemple 3 montre que par stripping à l'air on peut abaisser la teneur en iode d'une saumure de 12 à 0,7 ppm. Selon ce brevet pour enlever l'iode on peut utiliser soit l'adsorption sur charbon actif ou sur résine, soit le stripping à l'air, ces trois moyens pouvant être utilisés seuls ou en combinaison.

La demande de brevet EP-399 588 décrit un procédé d'épuration d'une solution aqueuse de chlorure de sodium dans lequel on oxyde les iodures en iode moléculaire qu'on adsorbe sur une résine échangeuse d'ions puis dans une étape suivante on oxyde les ions ammonium en azote moléculaire qu'on élimine de la solution par stripping à l'air.

La résine est du type anionique ayant des sites cationiques fixés qui sont des groupes ammonium quaternaire fixés sur des copolymères a longue chaîne du styrène ou du divinlylbenzène. On peut ainsi abaisser la teneur en iode de la saumure de 2,9 à 0,5 ppm (ex1), de 2,5 à 0,2 ppm (ex 2) ou de 2,9 à 0,3 PPM (ex 3).

Un lit de résine ne peut pas abaisser la teneur en iode d'une saumure en-dessous de 0,2 ppm. Le volume de résine est très important, le débit horaire de saumure est compris entre 2 et 10 fois le volume de la résine. Le taux de chargement en iode de la résine est faible au moment de la fuite en iode a 0,5 ppm. La demanderesse a trouvé que pour abaisser de 1,5 ppm à 0,2 ppm l'iode d'une saumure, dès qu'on a traité un volume de saumure égal à 250 fois le volume du lit, la fuite en iode atteint 0,5 ppm.

Le brevet US-4 483 754 précédemment cité présente comme équivalente l'adsorption sur résine et l'adsorption sur charbon actif. La demanderesse vient de découvrir que c'était complètement différent.

Un lit de charbon actif peut abaisser la teneur en iode d'une saumure jusqu'à 0,05 ppm. Le volume de charbon actif est faible, le débit horaire de saumure peut atteindre 30 à 50 fois le volume de charbon. La capacité du charbon est élevée, la demanderesse a trouvé que pour abaisser de 2 à 0,05 ppm l'iode d'une saumure le lit de charbon actif a une fuite en iode supérieure à 0,5 ppm des qu'on a traité un volume de saumure égal à 9 ou 10 000 fois le volume du lit. Le charbon actif se régénère facilement.

Le brevet US 1944423 décrit un procédé de purification d'une saumure contenant de l'iode que l'on oxyde en iode moléculaire qui est adsorbé sur du charbon actif sous forme pulverisée en suspension dans ladite saumure.

La présente invention est donc un procédé de purification d'une solution aqueuse de chlorure de métal alcalin contenant de l'iode dans lequel on l'oxyde en iode moléculaire puis qu'on l'adsorbe sur un lit de charbon actif préalablement oxydé.

La solution aqueuse de chlorure de métal alcalin (ou saumure) peut être par exemple une solution de chlorure de sodium, ou de potasium, cette solution peut aussi contenir des chlorates, perchlorates ou sulfates de métaux alcalins. Dans une solution aqueuse de chlorure de métal alcalin l'iode est le plus souvent sous forme iodure I-.

L'oxydation de l'iode en iode moléculaire se fait par un oxydant tel que le chlore actif ou le peroxyde d'hydrogène. Pour oxyder par le chlore actif il suffit d'injecter dans la saumure du chlore, de l'eau de chlore ou un hypochlorite. On peut aussi oxyder par un iodate ou un periodate.

On préfère le chlore actif pour son plus grand pouvoir oxydant. L'ajout d'oxydant peut être simplement contrôlé par la mesure du potentiel redox (rH) du milieu aqueux (c'est-à-dire de la saumure) qui doit se situer entre 460 et 560 mV Electrode à Calomel Saturé, ci-apres designé par ECS, mesuré à 50 °C et de préférence entre 500 et 550 mV/ECS. Cette oxydation se fait avantageusement sur une saumure à pH inférieur à 3 et de préférence entre 2 et 1,5.

Il va sans dire que si l'iode est déjà sous forme iode moléculaire il n'est pas nécessaire de procéder à l'oxydation Si l'iode est sous une forme oxydée au-dessus de l'iode moléculaire on la réduit en iode moléculaire par un réducteur. La saumure est généralement disponible à pH basique ou neutre, il suffit alors d'y ajouter un peu d'acide chlorhydrique. Si la saumure contient des carbonates le passage en pH acide provoque une décarbonatation, on dégaze le $CO_2$ avant d'effectuer l'oxydation de l'iode en iode moléculaire.

On peut utiliser tout type de charbon actif mais il est plus simple d'utiliser un charbon granulé en lit fixe par exemple de granulométrie 0,4 à 1,7 mm pour réduire les pertes de charge de la saumure. On a obtenu de bons résultats avec un charbon granulé dont la granulométrie est 0,4 à 1,25 mm, c'est un charbon de noix de coco commercialisé par la Societé CECA sous la dénomination ACTICARBONE NC 35.

Le charbon actif est légèrement réducteur vis-à-vis de l'iode élémentaire, il est donc préférable, pour obtenir une meilleure efficacité, d'oxyder légèrement la surface du charbon actif. Ce traitement d'oxydation peut être réalisé avec une solution chlorée contenant de quelques mg/l à quelques g/l de chlore actif. Par exemple, dans le cas des saumures de chlorure de sodium on peut utiliser une saumure de NaCl à un pH légèrement acide comme par exemple la saumure appauvrie et chlorée sortant d'une salle d'électrolyse.

Cette oxydation du charbon actif peut se faire avant d'effectuer l'adsorption de l'iode c'est-à-dire après la régénération deu charbon actif. On ne sortirait pas du cadre de l'invention en effectuant cette oxydation au cours de l'adsorption de l'iode en utilisant la saumure à épurer en iode, il suffit d'oxyder l'iode en partie ou en totalité au-dessus de l'iode moléculaire c'est-à-dire à un dégré d'oxydation supérieur à 0 (iodate, périodate par exemple). On peut aussi combiner une oxydation avant l'adsorption et une oxydation pendant l'adsorption.

Avec un charbon actif oxydé avant l'adsorption de l'iode, une saumure à 300 g/l de NaCl et contenant jusqu'à 10 mg/l d'iode peut être purifiée efficacement si le pH est maintenu entre 1,6 et 2 et si le rH du milieu est contrôlé.

La teneur en iode de 10 000 BV de saumure a été abaissée de 10 mg/1 à moins de 0,05 mg/1.

(BV : Bed Volume, volume du lit de charbon actif).

Il suffit ensuite de régénérer le charbon actif en enlevant l'iode par un solvant de l'iode ou un réducteur.

Le lit de charbon actif peut être régénéré par exemple par une solution de sulfite. L'iode élémentaire est réduit par l'ion sulfite suivant la réaction :

$$I_2 + SO_3^{2-} + 2\,H_2O \rightarrow 2\,I^- + SO_4^{2-} + 2\,H^+$$

L'iode peut être ainsi extrait du charbon actif compte tenu de l'absence d'affinité entre l'iodure et le charbon actif.

On préfére utiliser une solution légèrement acide afin d'éviter l'apparition de fines particules de charbon actif lors de l'élution. Si l'élution est pratiquée avec une solution basique, on risque de retrouver des fines particules de charbon actif dans l'éluat.

De préférence, la solution de sulfite est à pH 3-5. A la sortie de la colonne il est courant que le pH descende en-dessous de 1 par suite de la génération d'H+.

L'élution par une solution de sulfite contenant 1 à 20 g/l de $Na_2SO_3$ permet d'extraire pratiquement la totalité de l'iode adsorbe par le charbon actif.

Une fois l'iode extrait du charbon actif, ce dernier peut subir le traitement d'oxydation décrit précédemment et être réutilisé pour purifier une saumure contenant de l'iode.

La régénération du charbon actif peut être effectuée par plusieurs lavages en boucle fermée avec une solution aqueuse légèrement acide de sulfite. Le charbon est ensuite rincé par une solution aqueuse de pH compris entre 1 et 3, cette solution légèrement réductrice permet d'extraire les dernières traces d'iode.

Le procédé de l'invention est de préférence appliqué à des solutions aqueuses qui ont déjà été épurées en calcium et magnésium.

L'invention concerne aussi un procédé de purification d'une solution aqueuse de chlorure de métal alcalin contenant de l'iode sous forme d'iode moléculaire dans lequel on adsorbe cet iode sur du charbon actif préalablement oxydé. Il suffit d'opérer comme précédemment sans l'étape d'oxydation de l'iode.

EXEMPLE 1 (comparatif)

50 g de charbon actif de granulométrie 0,4 - 1,25 mm (références NC35 de CECA) sont placés dans une colonne. La saumure à pH = 1,6 - T = 50°C = rH = 500 - 530 mV/ECS à 50° C contient 2,2 mg/l d'iode. C'est une saumure de chlorure de sodium contenant 300 g/1 NaCl. Le débit est égal à 45 BV/h, c'est-à-dire le débit horaire de saumure est de 45 fois le volume du lit de charbon actif.

La teneur en iode sortie colonne fluctue entre 0,2 et 0,5 mg/l pendant 200 h.

EXEMPLE 2

On opère comme à l'Exemple 1, en revanche les 50 g de charbon actif ont été oxydés par 15 g de NaC10 en opérant par 10 Bv/heure d'une saumure à 300 g/l de NaCl contenant 200 mg/l de NaCl0.

La teneur en iode à la sortie de la colonne reste inférieure à 0,05 mg/l pendant 200 h.

EXEMPLE 3

Le charbon actif de l'Exemple 2 est régénéré après 100 h de marche (en absorption). Le taux de chargement calculé est alors de = 8 % (soit 4 g d'iode).

L'extraction de l'iode du charbon est réalisée par une solution à pH 4 de $Na_2SO_3$ à 10 g/l passant à 3 BV/h à travers la colonne pendant 2 h 30. La désorption est suivie d'un rinçage par une saumure légèrement réductrice et contenant ≈ 200 g/l de NaCl.

98,5 % de l'iode attendue (d'après le taux de chargement calculé) a été extrait du charbon actif.

EXEMPLE 4

Une colonne contenant 75 g de charbon actif a été activée (par une saumure à 200 g/l contenant 3 g/l de NaCl0) passant à travers la colonne à un débit de 10 BV/h. L'équivalent de 25 g de NaClO ont été utilisés pour oxyder les 75 g de charbon actif.

La saumure est identique à celle de l'exemple 1. En revanche le débit est de 30 BV/h et le charbon actif a été oxydé.

La teneur en iode à la sortie de la colonne reste inférieure à 0,05 mg/l pendant plus de 300 h.

EXEMPLE 5

Une colonne de charbon actif (45 g) contient ≈ 25 % en poids d'iode après 950 h de marche. On a obtenu cette charge en traitant une saumure à 10 mg/l d'iode

Une solution à pH = 4 de 10 g/l de $Na_2SO_3$ passe à 3 BV/h à travers la colonne. Après 8 h, 10,95 g d'iode ont été extraits du charbon actif soit plus de 96 % de l'iode adsorbé.

Durant la phase de l'élution le charbon actif n'a subi aucun dommage.

**Revendications**

1. Procédé de purification d'une solution aqueuse de chlorure de métal alcalin contenant de l'iode dans lequel on l'oxyde en iode moléculaire puis qu'on l'adsorbe sur un lit de charbon actif préalablement oxydé.

2. Procédé selon la revendication 1, caractérisé en ce que l'oxydation du charbon actif est effectuée par passage sur le charbon actif d'une solution contenant du chlore actif.

3. Procédé selon la revendication 1, caractérisé en ce que le charbon actif est régénéré par mise en contact avec un solvant de l'iode.

4. Procédé selon la revendication 1, caractérisé en ce que le charbon actif est régénéré par mise en contact avec un réducteur jusqu'à transformation de l'iode adsorbé en iodure qui se désorbe.

5. Procédé selon la revendication 4 caractérisé en ce que le réducteur est à pH acide.

6. Procédé de purification d'une solution aqueuse de chlorure de métal alcalin contenant de l'iode sous forme d'iode moléculaire dans lequel on adsorbe cette iode sur un lit de charbon actif préalablement oxydé.

7. Procédé selon l'une des revendications 1 à 6, caractérisé en ce que le métal alcalin est le sodium.

**Claims**

1. Process for the purification of an aqueous solution of alkali metal chloride containing iodine, in which it is oxidized to molecular iodine and is then adsorbed on a bed of previously oxidized active carbon.

2. Process according to Claim 1, characterized in that the oxidation of the active carbon is carried out by passing a solution containing active chlorine over the active carbon.

3. Process according to Claim 1, characterized in that the active carbon is regenerated by being brought into contact with a solvent for iodine.

4. Process according to Claim 1, characterized in that the active carbon is regenerated by being brought into contact with a reducing agent until the adsorbed iodine is converted into iodide, which is desorbed.

5. Process according to Claim 4, characterized in that the reducing agent is at acidic pH.

6. Process for the purification of an aqueous solution of alkali metal chloride containing iodine in the form of molecular iodine, in which this iodine is adsorbed onto a bed of previously oxidized active carbon.

7. Process according to one of Claims 1 to 6, characterized in that the alkali metal is sodium.

**Patentansprüche**

1. Verfahren zur Reinigung einer wäßrigen, jodhaltigen Alkalimetallchloridlösung, wobei man das enthaltene Jod zu molekularem Jod oxidiert und es dann auf einem zuvor oxidierten Aktivkohlebett adsorbiert.

2. Verfahren nach Anspruch 1, dadurch gekennzeichnet, daß die Oxidation der Aktivkohle durchgeführt wird, indem man eine Lösung, die aktives Chlor enthält, über die Aktivkohle gibt.

3. Verfahren nach Anspruch 1, dadurch gekennzeichnet, daß die Aktivkohle regeneriert wird, indem man sie mit einem Lösemittel für das Jod in Kontakt bringt.

4. Verfahren nach Anspruch 1, dadurch gekennzeichnet, daß die Aktivkohle regeneriert wird, indem man sie mit einem Reduktionsmittel in Kontakt bringt bis zur Umwandlung des adsorbierten Jods in Jodid, das desorbiert wird.

5. Verfahren nach Anspruch 4, dadurch gekennzeichnet, daß das Reduktionsmittel bei saurem pH-Wert vorliegt.

6. Verfahren zur Reinigung einer wäßrigen Alkalimetallchloridlösung, die Jod in Form von molekularem Jod enthält, wobei man dieses Jod auf einem zuvor oxidierten Aktivkohlebett adsorbiert.

7. Verfahren nach einem der Ansprüche 1 bis 6, dadurch gekennzeichnet, daß das Alkalimetall Natrium ist.